# EUROPEAN PATENT SPECIFICATION

(11) **EP 1 390 602 B1**
(45) Date of publication and mention of the grant of the patent: **02.11.2006**
(21) Application number: 02724445.8
(22) Date of filing: 02.05.2002
(51) Int. Cl.: E21B 41/00

(54) **APPARATUS AND METHOD FOR THE TREATMENT OF WASTE PRODUCTS**
VORRICHTUNG UND VERFAHREN ZUR BEHANDLUNG VON KONTAMINIERTEN MATERIALIEN
APPAREIL ET PROCEDE

(30) Priority: 02.05.2001 GB 0110731
(43) Date of publication of application: 25.02.2004
(73) Proprietor: Total Waste Management Alliance Plc., Aberdeen AB12 3BQ (GB)
(72) Inventor: GARRICK, David Stephen, Shetland ZE2 9SH (GB); GARRICK, Ronald Laurence, Ellon, Aberdeenshire AB41 8QD (GB)
(74) Representative: Allan, James Stewart
(86) International application number: PCT/GB2002/002026
(87) International publication number: WO 2002/088506

(56) References cited:
- EP-A- 0 331 842
- US-A- 4 606 283
- US-A- 5 582 118
- US-A- 5 727 741
- KAPILA M ET AL: "UNIQUE THERMAL SEPARATION TECHNOLOGY HELPS OPERATORS MEET WASTE MANAGEMENT GOALS" WORLD OIL, GULF PUBLISHING CO. HOUSTON, US, vol. 220, no. 10, October 1999 (1999-10), pages 75-76,78, XP000880349 ISSN: 0043-8790

## Description

This invention relates to apparatus and a method for treatment of waste products and by-products of industrial processes, and particularly to the treatment of drill cuttings recovered from oil and gas wells, and related activities.

Drill cuttings essentially comprise small chips of rock and other material from the formation being drilled, which are generated during the drilling process and are washed back to the surface of the well by drilling fluid (sometimes called drilling mud) circulated in the well. Conventional drilling muds are typically oil-based, and are often toxic, so disposal of drill cuttings contaminated with oil-based drilling mud is a significant problem as the environmental consequences of dumping oil-contaminated drill cuttings into the ocean are not acceptable. Therefore, many methods of treating drill cuttings to remove oil-based contamination have been devised in the field of offshore oil and gas well drilling. One common method of dealing with contaminated drill cuttings is to crack the hydrocarbons present in the contaminated drill cuttings in a rotary mill. Existing methods of this nature typically rely on raising the temperature of the hydrocarbons above around 300-350°C.

GB-A-2 165 295 discloses a known design of reactor vessel for the treatment of drill cuttings, over which the invention is characterised.

According to the present invention there is provided a method of treating contaminated waste products as claimed in claim 1.

Preferably the reactor vessel has a smooth interior surface.

The rotary flails are typically attached to a rotor within the reactor vessel. The rotating flails beat the contaminated drill cuttings or other waste products at high-speed so as to generate heat within the reactor vessel. The amount of heat generated within the reactor vessel is typically fairly low, and the temperature typically rises within the reactor vessel to around 230-280°C, and typically 260-280°C.

The waste products in the vessel tend to collect in a bed of material at the radially outermost parts of the vessel and arrange themselves generally homogeneously against the smooth interior surface of the vessel. The flails therefore pass through the annular bed of waste products with a minimum of disruption/turbulence. The waste products generally remain in the bed on the inner surface of the vessel.

Since the method merely generates sufficient heat to change the phase of the contaminant, rather than cracking the contaminant and changing its molecular structure, it is more efficient and can run at lower temperatures than existing methods. Also valuable contaminants can be recovered without being cracked or changed at a molecular level.

Typically the method works best when treating solids contaminated by liquids, which evaporate in the heated reactor vessel and can easily be removed while in a gaseous phase, leaving a dry solid within the reactor chamber which can be removed after the process has been completed. In certain embodiments, the solid being treated (i.e. drill cuttings) can also be mechanically powdered by the rotary flails, leaving an inert powder which is safe for disposal in a conventional manner.

The present invention also provides apparatus for treating contaminated waste products as claimed in claim 17.

The temperature sensors feedback information to the motor driving the rotor, so that the speed of the rotor within the reactor vessel (and therefore the temperature within the reactor vessel) can be controlled by the feedback information from the temperature sensor.

The material to be treated within the reactor chamber is typically fed into the reactor chamber on a pump or on a conveyor that can typically comprise a belt, an auger, a worm drive, or a similar device. In certain preferred embodiments of the invention, a screw conveyor is used to deliver material to be treated into the reactor chamber.

The apparatus typically includes some means for evacuation of the reactor chamber, so that the contaminants liberated into the gaseous phase from the contaminated mixture in the reactor chamber can be removed easily. Typically, the reactor is provided with a fan or pump to remove gas from the reactor chamber. Typically the gas removed from the reactor chamber is at a high temperature, and in some embodiments of the invention, the heat from the gas removed from the reactor chamber can be used to heat up the rotor, mill chamber or other parts of the reactor chamber or apparatus, so as to make the process more efficient.

Alternatively, the gas can be evacuated under simple convection without a fan. This can be an advantage as it avoids feeding oxygen into the reactor, which could pose a fire or explosion risk, and can have a cooling effect.

The gas removed from the reactor chamber is typically processed in one or more cyclones to remove dust particles from the gas, and is typically thereafter condensed or distilled or further processed to remove particular contaminants that may be particularly toxic, so that they can be disposed of carefully, or alternatively, to remove others that are particularly valuable, so that they can be recovered for commercial use. In certain preferred embodiments of the invention, hot or cold fluids recovered from or generated by the distillation process downstream of the reactor vessel can be stored and/or directed back to certain other parts of the apparatus which may require these during the process.

Certain embodiments of the invention use a grinding material in the reactor vessel to increase friction between the rotor flails and the material being treated, in order to increase the heat generated within the vessel. The flails can typically be operated while the vessel contains only the grinding material in order to increase the temperature within the vessel before the material to be treated is added.

An embodiment of the present invention will now be described by way of example and with reference to the accompanying drawings, in which:
Fig 1a shows a side view of a reactor vessel;
Fig 1b shows a similar view of a further similar reactor vessel;

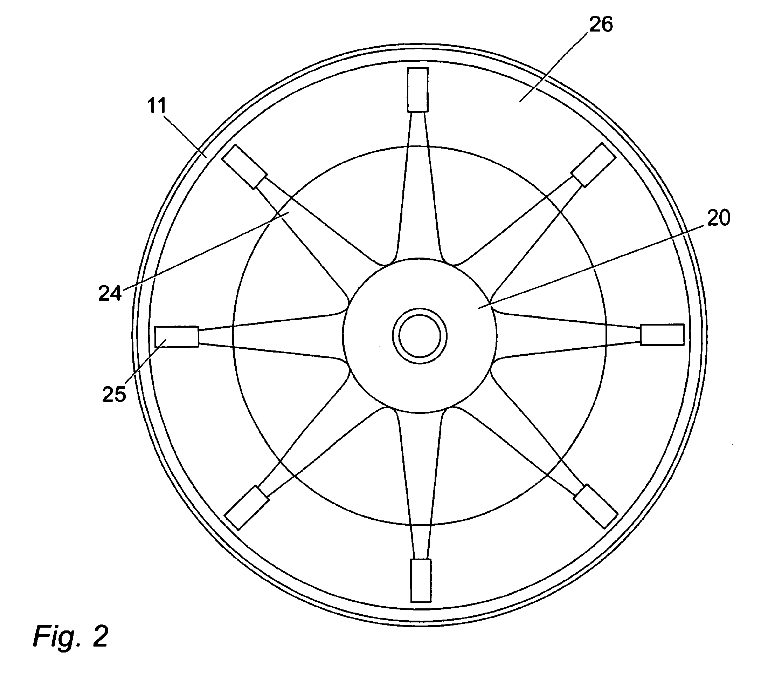

Fig 2 shows an end sectional view of the fig 1 reactor vessel; and

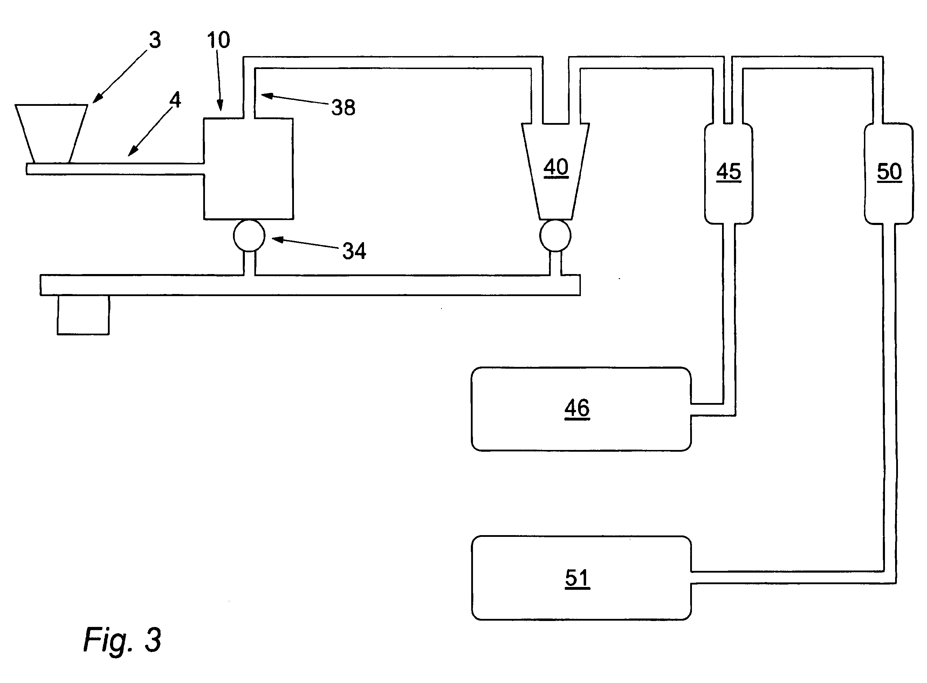

Fig 3 shows a schematic side view of apparatus incorporating the fig 1 vessel.

Referring now to the drawings, apparatus for treating contaminated drill cuttings mixed with oil-based drilling mud comprises a reactor 10 to which cuttings to be treated to remove contaminating hydrocarbons are fed from a feed hopper 3 via a pump or screw conveyor 4.

The reactor 10 comprises a cylindrical tube 11 having end walls 12, 13, each of which have a central bore through which an axle 15 extends along the central axis of the tube 11. The axle 15 is mounted between mounting blocks 17 on opposing sides of the tube 11, and is sealed to the end walls 12 and 13 at seals 18 and 19. A rotor 20 disposed in the tube 11 has a central bore through which the axle 15 extends so that the rotor 20 is mounted on and is affixed to the axle 15 along the central axis of the tube 11. The rotor 20 is driven by a motor (not shown).

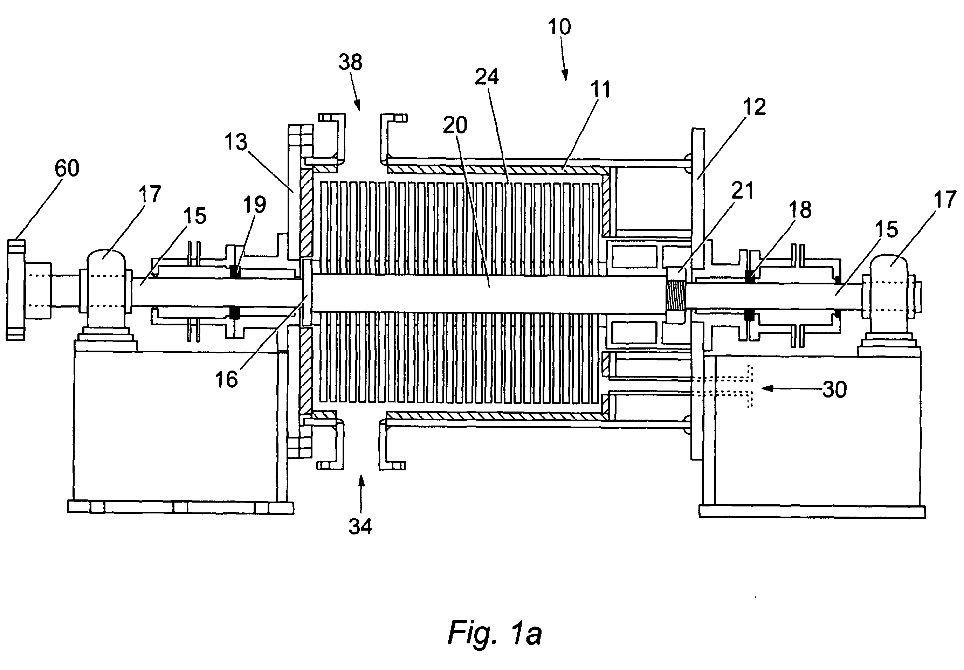

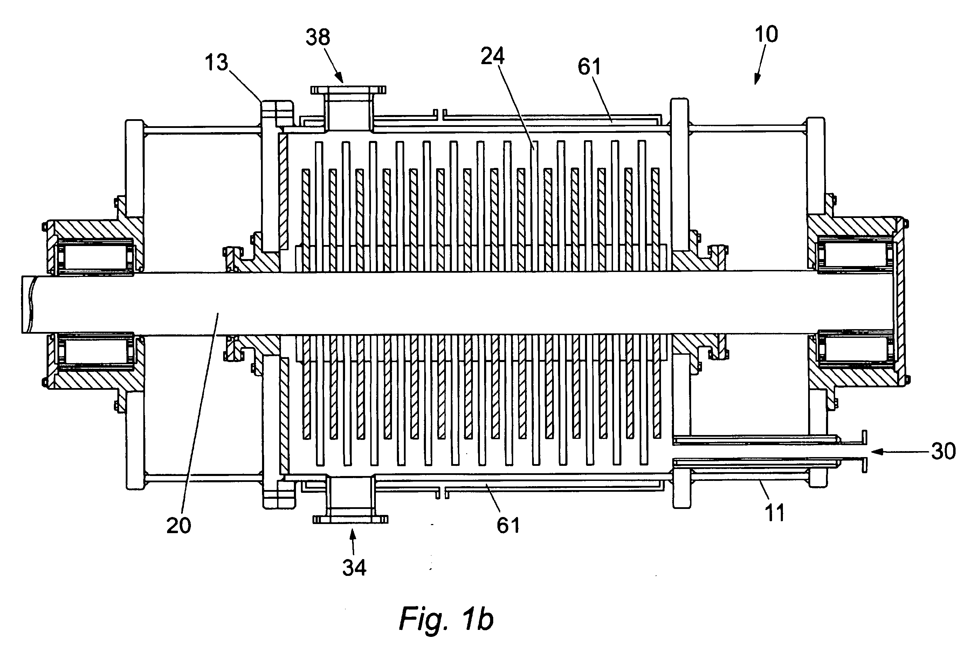

The rotor 20 has flails 24 extending radially from the central axis in 8 axially aligned rows spaced circumferentially around the axis of the axle 15. Two rows are shown in the side sectional view of fig 1. The rotor typically has 35-50 rows of flails, although the number depends on the axial length of the rotor, and can be varied within different embodiments of the invention. Each row is axially offset with respect to its neighbouring row by around 10-50mm, and the preferred axial spacing is between around 30-40mm. The ends of the flails can have heads 25 which extend radially to within around 5-20mm of the smooth inner surface of the tube 11. The flails are typically 100-300mm long and the typical radius of the tube 11 is 1-2m. The spacing of the radial gap between the inner surface of the tube 11 and the radially outermost end of the head 25 is typically kept as small as possible to ensure that the heads 25 pass in an arc very closely to the inner surface of the tube 11. With fine drill cuttings or other material to be treated the gap can be smaller than with more coarse material. This enhances the breaking up of the drill cuttings within the reactor 10.

The rotor 20 can be rigidly attached to the axle 15 e.g. by welding, but in this embodiment the rotor 20 is slid onto the axle 15 and abuts against a flange 16 on the axle 15 and a bolt 21 is offered onto a threaded portion of the axle to be tightened against the rotor 20 and force it against the flange 21. Thus the rotor 20 can be removed from the axle 15 for servicing.

The tube 11 has an inlet 30 for contaminated drill cuttings from the hopper 3, an outlet for dry processed solids 34, and a flue 38. The flue 38 optionally has a fan to extract gasses from the chamber and leads to a cyclone where the gasses are spun to remove dust and other particulate matter, after which they are passed through an oil condenser 45 to recover hydrocarbons from the gasses to a tank 46, and thereafter are passed though a water condenser 50 to recover water to a tank 51. The lower temperature at which the reactor operates ensures that the hydrocarbons recovered are not cracked and can be recycled for commercial use.

The operating temperature is typically selected in accordance with the type of hydrocarbons that are being recovered from the contaminated drill cuttings or other material, and need not always be 260-270°C, but can be at or around the boiling point of the particular hydrocarbons being recovered.

The reactor 10 is initially optionally loaded with a dry inert powder and the rotor 20 is then driven by a suitable motor (not shown but hydraulic motors are suitable) at a speed of 450-500rpm (typical range of 300-700rpm) for a period of 10-15 mins or until the temperature in the reactor 10 has risen to the optimum operating temperature of around 260-270°C, or to a temperature to suit the material being processed. The spinning flails create a centrifugal force which forces the powder on to the surface of the tube 11 to form a friction bed 26, i.e. a layer of material having a generally even depth over substantially the whole inner surface of the reactor. The smooth outer wall assists in this process by maintaining a uniform bed of material to give rise to efficient use of the energy used to generate the heat. The heat is produced by friction generated in the bed 26 between the flails 24 and the dry powder, but the initial heating step can be omitted to leave the drill cuttings to be heated themselves from ambient temperature, or the reactor 10 can be heated by applied heat from another source. The drill cuttings can also be pre-heated (e.g. by passing through a heat exchanger) prior to entering the reactor 10. A typical inert dry powder used in this step might be sand. Optionally, the reactor 10 can be heated by an oil jacket in order to aid the drying process.

Once the reactor 10 has reached the optimum operating temperature the screw conveyor or pump 4 is started to deliver the wet contaminated drill cuttings into the reactor through the inlet 30 while the rotor 20 is spinning. Prior to material entering the chamber the feed pipe containing the material to be processed can pass through a heat exchanger leading to materials obtaining preheating prior to entry thereby reducing the overall energy required within the process chamber. The centrifugal force generated by the spinning flails 24 also acts on the drill cuttings, which are forced into the friction bed 26 on the inner surface of the tube 11. The smooth surface of the tube 11 aids the uniform distribution of the drill cuttings and dry powder so that there is an even depth of material over the whole circumference of the tube 11.

The spinning flails 24 break up the clumps of drill cuttings and the friction produced between the flails 24, the drill cuttings and the friction bed 26 heats up the drill cuttings to the operating temperature of around 260-270°C. At this point, or as the materials (e.g. drill cuttings) enter the reactor, flash drying occurs and the contaminating hydrocarbons evaporate from the drill cuttings and are evacuated from the reactor through the flue 38 in their gas phase. The drill cuttings in the reactor 10 are macerated and move from the inlet end wall 12 towards the outlet 34 during which time any residual liquids are flashed off. The material leaving the outlet 34 is substantially dry powder, all of the contaminating hydrocarbons having been liberated from the solid phase cuttings and evacuated through the flue 38. The flails 26 continually generate heat, and this, optionally combined with external heating, maintains the reactor 10 at an adequate temperature to ensure the consistent drying of drill cuttings which are continuously entering and passing through the reactor 10.

Gas phase material evacuated through the flue 38 is passed through a cyclone 40 in order to remove particulate matter such as dust from the hydrocarbons, which are then passed sequentially through an oil condenser 45 and a water condenser 50, before recovered hydrocarbons and water are stored in tanks 46 and 51. Heat taken from the condensers can be used to heat fluid such as oil or water that can be fed into the rotor through fluid coupling 60 or to an oil jacket (not shown) in order to heat the reactor 10 and increase the efficiency of the process. Dust recovered from the cyclone 40 is deposited onto a conveyor for disposal by conventional means.

In a preferred embodiment, the outlet 34 comprises a valve that can open and close in response to feedback from sensors determining the amount of material in the reactor vessel. The reactor works best when filled to an optimum amount with contaminated drill cuttings, so that sufficient material in the reactor vessel is available for maceration by the flails and for the generation of heat by friction. With less material in the reactor vessel the frictional forces, and therefore the heat in the vessel, might fall, thereby reducing the efficiency of liberation of gas phase hydrocarbons. Therefore the reactor vessel is kept around 20-50% full by the outlet valve 34 closing when the reactor contains less than the optimum amount of material, and opening to deposit treated material onto a conveyor when the vessel contains more than the optimum amount. The sensor can be inside the reactor vessel or can preferably be situated in contact with the drive train of the rotor, and can measure the resistance to rotation of the rotor in the reactor chamber, being an indication of the amount of material in the chamber.

Fig 1b shows a modified embodiment having identical parts to the Fig 1a reactor, but having also an,oil jacket 61 for heating the reactor with the heat recovered from the apparatus.

Modifications and improvements can be incorporated without departing from the scope of the invention.

## Claims

1. A method of treating contaminated waste products, the method comprising the steps of disposing the contaminated waste products in a reactor having rotary flails, generating frictional heat within the reactor by rotating the flails in the reactor to beat the contaminated waste products, thereby changing the phase of the contaminant, and removing the contaminant from the reactor vessel after it has changed phase, **characterised in that** the temperature of the reactor vessel is monitored and the speed of the flails is related to the temperature.

2. A method according to Claim 1, wherein the phase of the contaminant is changed without changing its molecular structure.

3. A method according to Claim 1 or claim 2, wherein the ends of the rotating flails pass close to the interior surface of the reactor vessel.

4. A method according to any preceding Claim, wherein the flails are attached to a rotary shaft that is heated by an external source.

5. A method according to any preceding Claim, wherein a grinding material is introduced into the reactor vessel.

6. A method according to Claim 5, wherein, prior to introducing the waste products, the flails are operated while the vessel contains only a grinding material.

7. A method according to any preceding Claim, which further comprises the step of heating the reactor vessel from an external source.

8. A method according to Claim 7, where the reactor vessel is heated by an oil jacket.

9. A method according to any preceding Claim wherein the temperature within the reactor vessel rises to 230-280°C.

10. A method according to any preceding Claim, wherein the temperature within the reactor vessel rises to 260-280°C.

11. A method according to any preceding Claim, wherein the waste products are solids contaminated by liquids.

12. A method according to Claim 11, wherein the liquids evaporate in the reactor vessel to form a gas, which is then removed from the reactor vessel.

13. A method according to Claim 12, wherein heat from the gas removed from the vessel is used to heat parts of the apparatus.

14. A method according to Claims 12 or Claim 13, wherein the gas removed from the reactor vessel is processed in a cyclone to remove dust particles from the gas and the gas is then condensed or distilled or further processed to remove particular contaminants.

15. A method according to Claim 14, wherein hot or cold fluids recovered from or generated by the distillation process are stored and/or directed back to other parts of the apparatus.

16. A method according to any preceding Claim, wherein the amount of material in the reactor vessel is monitored, and the amount of waste products entering the vessel is related to the amount of material in the vessel.

17. Apparatus for treating contaminated waste products, the apparatus comprising a reactor vessel having rotating flails to beat the contaminated waste products so as to generate frictional heat within the reactor vessel, a device for applying heat to the contaminated waste products so as to change the phase of the contaminant, and an exhaust for removing the contaminant from the reactor vessel after it has changed phase, **characterised in that** the reactor vessel has temperature sensors that feedback information to a motor which drives the flails.

18. Apparatus according to Claim 17, wherein the reactor vessel has a smooth interior surface.

19. Apparatus according to claim 17 or claim 18, having a feeder means to feed the waste products into the reactor vessel.

20. Apparatus according to Claim 19, wherein the feeder means is a screw conveyor.

21. Apparatus according to any one of Claims 17 to 20, further comprising a means for evacuating contaminants in the gaseous phase from the reactor vessel.

22. Apparatus according to any one of Claims 17 to 21, further comprising an external heating source.

## Patentansprüche

1. Ein Verfahren zum Behandeln von kontaminierten Abfallprodukten, wobei das Verfahren die Schritte des Entsorgens der kontaminierten Abfallprodukte in einem Reaktor, der drehbare Schlegel aufweist, des Erzeugens von Reibungswärme innerhalb des Reaktors durch Drehen der Schlegel in dem Reaktor, um die kontaminierten Abfallprodukte auszuklopfen, wodurch die Phase des Kontaminants verändert wird, und des Entfernens des Kontaminants aus dem Reaktorbehälter, nachdem er die Phase verändert hat, beinhaltet, **dadurch gekennzeichnet, dass** die Temperatur des Reaktorbehälters überwacht wird und sich die Geschwindigkeit der Schlegel nach der Temperatur richtet.

2. Verfahren gemäß Anspruch 1, wobei die Phase des Schadstoffs verändert wird, ohne dessen Molekülstruktur zu verändern.

3. Verfahren gemäß Anspruch 1 oder Anspruch 2, wobei die Enden der sich drehenden Schlegel nahe an der inneren Oberfläche des Reaktorbehälters vorbeiführen.

4. Verfahren gemäß einem der vorhergehenden Ansprüche, wobei die Schlegel an einer drehbaren Welle, die von einer externen Quelle erwärmt wird, befestigt sind.

5. Verfahren gemäß einem der vorhergehenden Ansprüche, wobei eine Schleifsubstanz in den Reaktorbehälter eingeführt wird.

6. Verfahren gemäß Anspruch 5, wobei die Schlegel vor dem Einführen der Abfallprodukte betrieben werden, während der Behälter nur eine Schleifsubstanz enthält.

7. Verfahren gemäß einem der vorhergehenden Ansprüche, das ferner den Schritt des Erwärmens des Reaktorbehälters aus einer externen Quelle beinhaltet.

8. Verfahren gemäß Anspruch 7, wobei der Reaktorbehälter durch einen ölgespeisten Heizmantel erwärmt wird.

9. Verfahren gemäß einem der vorhergehenden Ansprüche, wobei die Temperatur innerhalb des Reaktorbehälters auf 230-280 °C ansteigt.

10. Verfahren gemäß einem der vorhergehenden Ansprüche, wobei die Temperatur innerhalb des Reaktorbehälters auf 260-280 °C ansteigt.

11. Verfahren gemäß einem der vorhergehenden Ansprüche, wobei die Abfallprodukte von Flüssigkeiten kontaminierte Feststoffe sind.

12. Verfahren gemäß Anspruch 11, wobei die Flüssigkeiten in dem Reaktorbehälter verdampfen, um ein Gas zu bilden, welches dann aus dem Reaktorbehälter entfernt wird.

13. Verfahren gemäß Anspruch 12, wobei Wärme aus dem aus dem Behälter entfernten Gas verwendet wird, um Teile des Geräts zu erwärmen.

14. Verfahren gemäß Anspruch 12 oder Anspruch 13, wobei das aus dem Reaktorbehälter entfernte Gas in einem Zyklonbrenner verarbeitet wird, um Staubpartikel aus dem Gas zu entfernen, und das Gas wird dann kondensiert oder destilliert oder weiter verarbeitet, um bestimmte Kontaminanten zu entfernen.

15. Verfahren gemäß Anspruch 14, wobei aus dem Destillationsvorgang wiedererlangte oder durch ihn erzeugte warme oder kalte Fluide in anderen Teilen des Geräts gespeichert und/oder dorthin zurückgeleitet werden.

16. Verfahren gemäß einem der vorhergehenden Ansprüche, wobei die Menge an Substanz in dem Reaktorbehälter überwacht wird, und die Menge an Abfallprodukten, die in den Behälter eintritt, der Menge an Substanz in dem Behälter zugehörig ist.

17. Gerät zum Behandeln von kontaminierten Abfallprodukten, wobei das Gerät einen Reaktorbehälter, der sich drehende Schlegel aufweist, um die kontaminierten Abfallprodukte auszuklopfen, um innerhalb des Reaktorbehälters Reibungswärme zu erzeugen, eine Vorrichtung zum Anwenden von Wärme auf die kontaminierten Abfallprodukte, um die Phase des Kontaminants zu verändern, und einen Auslass zum Entfernen des Kontaminants aus dem Reaktorbehälter, nachdem sich dessen Phase verändert hat, beinhaltet, **dadurch gekennzeichnet, dass** der Reaktorbehälter Temperaturfühler aufweist, die Informationen an einen Motor, der die Schlegel antreibt, rückführen.

18. Gerät gemäß Anspruch 17, wobei der Reaktorbehälter eine glatte innere Oberfläche aufweist.

19. Gerät gemäß Anspruch 17 oder Anspruch 18, das ein Zuführmittel aufweist, um dem Reaktorbehälter die Abfallprodukte zuzuführen.

20. Gerät gemäß Anspruch 19, wobei das Zuführmittel eine Förderschnecke ist.

21. Gerät gemäß einem der Ansprüche 17 bis 20, das ferner ein Mittel zum Absaugen von Kontaminanten in der gasförmigen Phase aus dem Reaktorbehälter beinhaltet.

22. Gerät gemäß einem der Ansprüche 17 bis 21, das ferner eine externe Wärmequelle beinhaltet.

## Revendications

1. Une méthode de traitement de produits de déchets contaminés, la méthode comportant les étapes de disposer les produits de déchets contaminés dans un réacteur ayant des fléaux rotatifs, générer de la chaleur de frottement au sein du réacteur en faisant tourner les fléaux dans le réacteur pour battre les produits de déchets contaminés, changer de ce fait la phase du contaminant, et retirer le contaminant de la cuve de réacteur après qu'il a changé de phase, **caractérisée en ce que** la température de la cuve de réacteur est surveillée et la vitesse des fléaux est liée à la température.

2. Une méthode selon la revendication 1, dans laquelle la phase du contaminant est changée sans changer sa structure moléculaire.

3. Une méthode selon la revendication 1 ou la revendication 2, dans laquelle les extrémités des fléaux rotatifs passent près de la surface intérieure de la cuve de réacteur.

4. Une méthode selon n'importe quelle revendication précédente, dans laquelle les fléaux sont attachés à un arbre rotatif qui est chauffé par une source externe.

5. Une méthode selon n'importe quelle revendication précédente, dans laquelle un matériau broyeur est introduit dans la cuve de réacteur.

6. Une méthode selon la revendication 5, dans laquelle, avant d'introduire les produits de déchets, les fléaux sont activés tandis que la cuve ne contient qu'un matériau broyeur.

7. Une méthode selon n'importe quelle revendication précédente, laquelle comporte de plus l'étape de chauffer la cuve de réacteur à partir d'une source externe.

8. Une méthode selon la revendication 7, où la cuve de réacteur est chauffée par une enveloppe à huile.

9. Une méthode selon n'importe quelle revendication précédente dans laquelle la température au sein de la cuve de réacteur s'élève pour atteindre 230 à 280 °C.

10. Une méthode selon n'importe quelle revendication précédente, dans laquelle la température au sein de la cuve de réacteur s'élève pour atteindre 260 à 280 °C.

11. Une méthode selon n'importe quelle revendication précédente, dans laquelle les produits de déchets sont des solides contaminés par des liquides.

12. Une méthode selon la revendication 11, dans laquelle les liquides s'évaporent dans la cuve de réacteur pour former un gaz, lequel est ensuite retiré de la cuve de réacteur.

13. Une méthode selon la revendication 12, dans laquelle de la chaleur provenant du gaz retiré de la cuve est utilisée pour chauffer des parties de l'appareil.

14. Une méthode selon la revendication 12 ou la revendication 13, dans laquelle le gaz retiré de la cuve de réacteur est conditionné dans un cyclone pour retirer des particules de poussière du gaz et le gaz est ensuite condensé ou distillé ou conditionné plus avant pour retirer des contaminants particulaires.

15. Une méthode selon la revendication 14, dans laquelle des fluides chauds ou froids récupérés du processus de distillation ou générés par celui-ci sont stockés et/ou redirigés vers d'autres parties de l'appareil.

16. Une méthode selon n'importe quelle revendication précédente, dans laquelle la quantité de matériau dans la cuve de réacteur est surveillée, et la quantité de produits de déchets entrant dans la cuve est liée à la quantité de matériau dans la cuve.

17. Appareil pour le traitement de produits de déchets contaminés, l'appareil comportant une cuve de réacteur ayant des fléaux rotatifs pour battre les produits de déchets contaminés de façon à générer de la chaleur de frottement au sein de la cuve de réacteur, un dispositif pour appliquer de la chaleur sur des produits de déchets contaminés de façon à changer la phase du contaminant, et un organe d'échappement pour retirer le contaminant de la cuve de réacteur après qu'il a changé de phase, **caractérisé en ce que** la cuve de réacteur a des capteurs de température qui envoient en retour des informations à un moteur qui entraîne les fléaux.

18. Appareil selon la revendication 17, dans lequel la cuve de réacteur a une surface intérieure lisse.

19. Appareil selon la revendication 17 ou la revendication 18, ayant un moyen d'amenée pour amener les produits de déchets dans la cuve de réacteur.

20. Appareil selon la revendication 19, dans lequel le moyen d'amenée est un transporteur à vis.

21. Appareil selon n'importe laquelle des revendications 17 à 20, comportant de plus un moyen pour évacuer des contaminants dans la phase gazeuse de la cuve de réacteur.

22. Appareil selon n'importe laquelle des revendications 17 à 21, comportant de plus une source de chauffage externe.
